# EUROPÄISCHE PATENTSCHRIFT

(11) **EP 0 861 774 B1**
(45) Veröffentlichungstag und Bekanntmachung des Hinweises auf die Patenterteilung: **28.07.2004**
(21) Anmeldenummer: 97118184.7
(22) Anmeldetag: 20.10.1997
(51) Int. Cl.: B64C 13/08

(54) **Luftmasseregelsystem für ein Passagierflugzeug**
Air flow control system for passenger aircraft
Système de régulation du débit de la masse d'air pour aéronef de transport de passagers

(30) Priorität: 27.02.1997 DE 19707858
(43) Veröffentlichungstag der Anmeldung: 02.09.1998
(73) Patentinhaber: Airbus Deutschland GmbH, 21129 Hamburg (DE)
(72) Erfinder: Scherer, Thomas, Dr.-Ing., 22559 Hamburg (DE); Buchholz, Uwe, Dipl.-Ing., 21640 Bliedersdorf (DE)
(74) Vertreter: Hansmann, Dierk, Dipl.-Ing.

(56) Entgegenhaltungen:
- EP-B- 0 537 296
- WO-A-95/28605
- US-A- 4 966 005
- US-A- 5 086 622
- US-A- 5 516 330

## Beschreibung

Die Erfindung bezieht sich auf ein Luftmasseregelsystem und ein Verfahren zur Belüftung einer Flugzeug-Passagierkabine für ein Passagierflugzeug gemäß den Oberbegriffen der Ansprüche 1 und 8. Mit ihr wird der Luftmassestrom in Abhängigkeit von der Wärmebilanz der Flugzeug-Passagierkabine geregelt.

In einem Passagierflugzeug werden Flugzeugkabinen als Passagier- oder Frachträume ausgestaltet, die man in Temperaturzonen aufteilt, welche unabhängig voneinander temperaturgeregelt werden können. Dabei besteht für Passagierräume die Forderung, daß räumlich eine entsprechende Mindestfrischluftmenge pro Passagier zugeführt wird. Die temperaturgeregelte Frischluftversorgung wird dadurch realisiert, indem (mehrere) Hochdruckgebläse (Trieb- oder Hilfstriebwerk) hochverdichtete heiße Frischluft einem flugzeuginternen Hochdruck-Luftverteilernetz (HD-LVN) einspeisen. Dem HD-LVN wird daraufhin die hochverdichtete Frischluft entnommen. Ein dem HD-LVN nachgeschaltetes Regelventil regelt den Volumenstrom der abgeführten Frischluftmenge, der den ihm nachgeschalteten Klimapacks (Kühlaggregate) zugeführt wird. Durch die Klimapacks erfolgt eine Konditionierung (Entspannung und Abkühlung) der ihnen eingespeisten Frischluft. Die den Klimapacks abgeführte Frischluft, welche nach ihrer Konditionierung das Druckniveau der Flugzeugkabinen aufweist, wird dann in ein flugzeuginternes Niedrigdruck-Luftverteilungsnetz (ND-LVN) eingespeist. Die dem ND-LVN abgeführte Frischluft wird mit einem Teil der verbrauchten Kabinenluft, die man mit einem Niederdruckgebläse (Ventilator) absaugt, mittels einem Mixer gemischt, und danach als aufbereitete Rezirkulationsluft (Mischluft) in die (definitiv aufgeteilten) Flugzeugtemperaturzonen des Passagierraumes geleitet. Die individuelle Temperaturregelung der einzelnen Zonen wird durch ein Trimmsystem sichergestellt. Nach der EP 0 537 296 B1 werden hierbei die zu beachtenden Regelgrößen von einem Controller überwacht und gesteuert.

Es ist zudem bekannt, daß man mit den Klimapacks Lufttemperaturen erzielen kann, die unterhalb des Wassergefrierpunktes liegen. Danach muß der Wasseranteil aus der Luftmenge, die den Klimapacks zugeführt wird, abgeschieden werden, um Eis- und Schneebildung zu verhindern. Dieser Vereisungsschutz limitiert die mögliche Kühlleistung der Klimapacks in Abhängigkeit vom Wassergehalt des zugeführten Luftstromes.

Eis und Schnee sind für ein ND-LVN störende Quellen, die an strömungskritischen Stellen (Baugruppen, Rohrleitungen ect.) Querschnittsverengungen verursachen. Dabei können durch Eis- bzw. Schneeverstopfung unliebsame Vollsperrungen der Luftstrom-Verbindungsleitungen (Rohrleitungen) eintreten, die zu katastrophenartigen Rohrbrüchen führen. Weiterhin führt das den Rohrquerschnitt verstopfende Eis infolge des Luftstromes, der die Querschnittsverengung passiert, zu Geräuschen, die den Passagierkomfort beeinträchtigen. Diese Tatsache tritt besonders dann auf, wenn parallel zu der Reduzierung des Frischluftvolumenstromes auf die zugelassene Minimalmenge die notwendige Klimaaggregat-Auslaßtemperatur unter den Wassergefrierpunkt sinkt und der Luftvolumenstrom noch eine Restfeuchte aufweist, wodurch die Kühlaggregatleistung eingeschränkt wird. Ferner ist aus der DE 33 30 556 C2 bekannt, daß eine Eisbildung (in der Turbinenluft) durch Rezirkulation von Kabinenluft minimiert werden kann. Es sind keine weiteren Lösungen bekannt, deren Maßnahmen die Verhinderung der Vereisung des Luftströmungsquerschnittes der Luftstromverbindungsleitungen im ND-LVN vorsehen und gleichzeitig eine minimale benötigte Frischluftmengenzufuhr zur Belüftung der Flugzeugkabinen umsetzen.

Demzufolge liegt der Erfindung die Aufgabe zugrunde, ein gattungsgemäßes Luftmasseregelsystem für ein Passagierflugzeug derart zu verbessern, daß sich mit ihm die Belüftung der Flugzeugkabine mit frischluftaufbereiteter Rezirkulationsluft in Abhängigkeit der Wärmebilanz der höchstbelasteten Kabinentemperaturbereiche regeln läßt, wobei dabei der Anteil der Frischluftmenge in der Rezirkulationsluft eine geforderte Minimalmenge nicht unterschreitet. Durch die Rohrleitungen des Niederdruck-Luftverteilungsnetz des Flugzeuges soll eine ungehinderte Strömung der konditionierten Frischluft sichergestellt werden, wonach der Rohrquerschnitt innerhalb strömungskritischer Bereiche nicht durch Eis- und Schneeverstopfungen verengt oder verschlossen wird.

Diese Aufgabe wird durch die in den Ansprüchen 1 und 8 angegebenen Maßnahmen gelöst. In den weiteren Unteransprüchen sind zweckmäßige Ausgestaltungen dieser Maßnahmen angegeben.

Die Erfindung ist in einem Ausführungsbeispiel anhand der beigefügten Zeichnung näher beschrieben. Es zeigen
- Fig.1: ein Blockschaltbild des Luftmasseregelsystems;
- Fig.2: ein Übersichtsschaltbild des Luftmasseregelsystems.

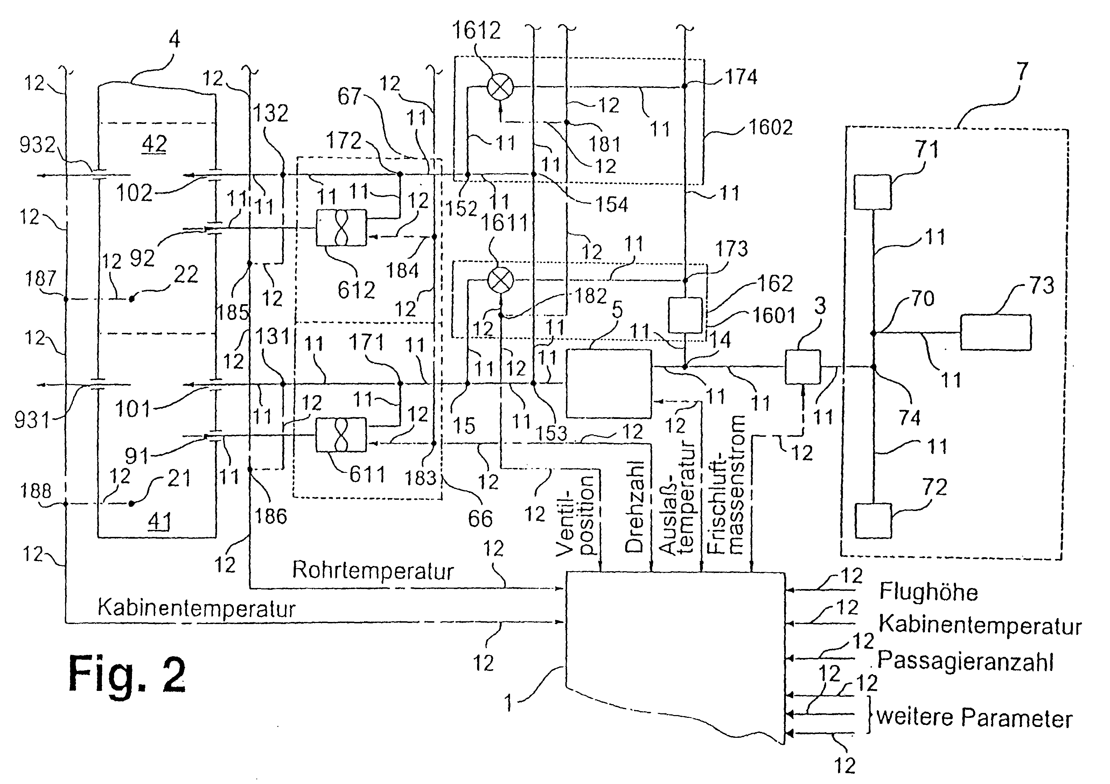

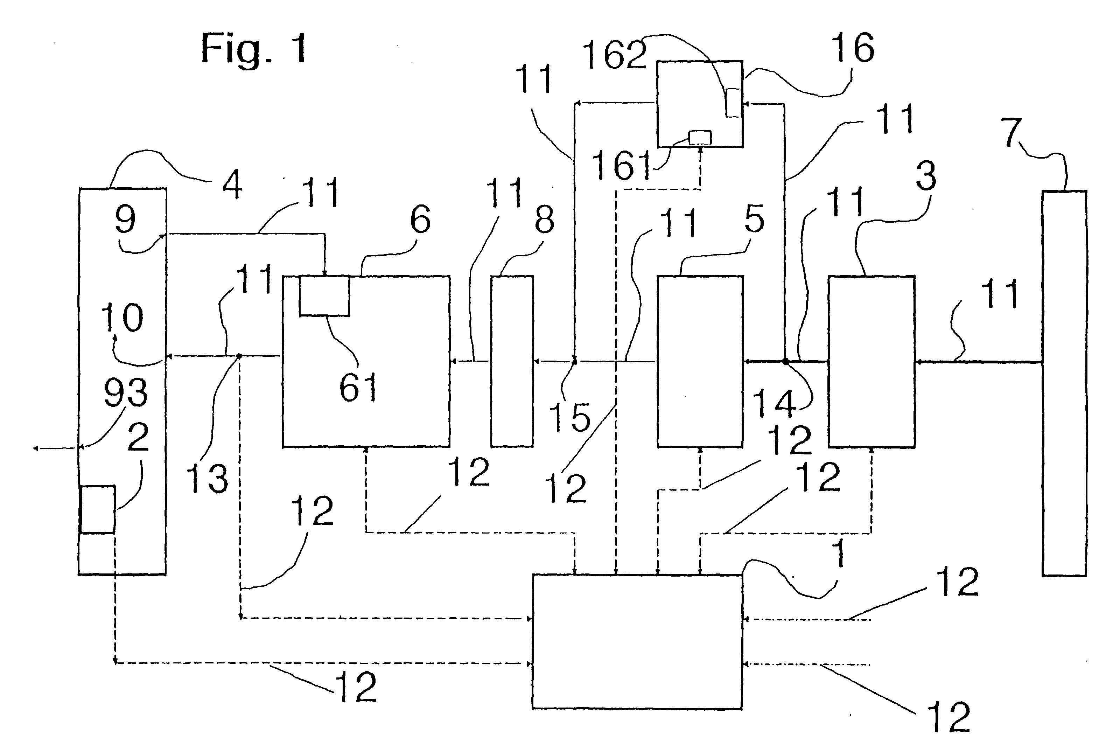

In der **Fig.1** ist das Luftmasseregelsystem zur Regelung des Luftmassestromes (der Ventilation) in Abhängigkeit von der Wärmebilanz der Flugzeug-Passagierkabine in einem Blockschaltbild dargestellt, dem sich der prinzipielle Aufbau des Luftmasseregelsystems für ein Passagierflugzeug entnehmen läßt.

Das Luftmasseregelsystem besteht (im wesentlichen) aus den Elementen: Frischluftregeleinrichtung 3, Klimaeinrichtung 5, Luftaufbereitungseinrichtung 6, Heißfrischluft-Regeleinrichtung 16, die durch eine Regeleinheit 1 separat angesteuert werden. Dabei ist die Frischluftregeleinrichtung 3 luftstrombezogen einem Hochdruck-Luftverteilernetz 7 (nachfolgend HD-LVN genannt) angeschlossen, welches der Frischluftregeleinrichtung 3 eingangsseitig hochverdichtete temperierte (heiße) Frischluft einspeist. Die Frischluftregeleinrichtung 3 regelt den Durchsatz des Frischluftmassenstromes (den Volumenstrom der Frischluft) und leitet die Frischluft an die ihr luftstrombezogen nachgeschaltene Klimaeinrichtung 5 weiter, auf deren Leitungsverbindung eine erste Schnittstelle 14 liegt. Der Ausgang der Klimaeinrichtung 5 ist luftstrombezogen mit einem Niederdruck-Luftverteiternetz 8 (nachfolgend ND-LVN genannt) verbunden. Auf dieser Leitungsverbindung befindet sich eine zweite Schnittstelle 15. Dabei speist die Klimaeinrichtung 5 dem ND-LVN 8 konditionierte (entspannte, abgekühlte) Frischluft ein, die das Druckniveau der Kabinenluft der (später erwähnten und) zu belüftenden Flugzeugkabine 4 aufweist. Der Klimaeinrichtung 5 ist luftstrombezogen eine Heißfrischluft-Regeleinrichtung 16 parallel geschalten. Bei alledem ist die Heißfrischluft-Regeleinrichtung 16 eingangsseitig der ersten Schnittstelle 14 und ausgangsseitig der zweiten Schnittstelle 15 zugeschalten. Mit der Parallelschaltung der Heißfrischluft-Regeleinrichtung 16 wird bezweckt, daß ein Nachregeln der Temperatur der konditionierten Frischluft durch (mengen- und druck-)angepaßte Zuleitung von temperierter (heißer) Frischluft über diese Parallelverbindung nicht ausgeschlossen wird. Dem ND-LVN 8 ist luftstrombezogen die Luftaufbereitungseinrichtung 6 nachgeschalten.

Die Luftaufbereitungseinrichtung 6 ist luftstrombezogen mit einem Luftauslaß 9 (outlet) der Passagierkabine 4 verbunden. Über diese Verbindung wird mittels einer der Luftaufbereitungseinrichtung 6 integrierten (und in der Fig. 1 angedeuteten) Gebläseeinheit 61 ein Teil der verbrauchten Kabinenluft als Rezirkulationsluft abgesaugt, wobei die Absaugluftmenge durch die Gebläseeinheit 61 (durch wenigstens einen der Gebläseeinheit integrierten drehzahlgeregelten Ventilator) geregelt wird. Die abgesaugte Kabinenluft wird einer (der Luftaufbereitungseinrichtung 6 integrierten und in der Fig. 1 nicht gezeigten) luftstrombezogenen Schnittstelle zugeleitet, zu deren Bestandteil eine (in Fig. 1 nicht gezeigte) Mischereinheit zählt. Dieser Schnittstelle wird (die dem ND-LVN 8 abgeführte) konditionierte Frischluft zugeleitet, die dann mittels der Mischereinheit mit dem abgesaugten Teil der Kabinenluft vermischt wird. Über eine luftstrombezogene Verbindung, die die Luftaufbereitungseinrichtung 6 mit einem Lufteinlaß 10 (inlet) der Passagierkabine 4 verbindet, wird danach die erhaltene Mischluft als aufbereitete Rezirkulationsluft der Passagierkabine 4 eingespeist. Dieser Verbindung ist (nahe dem Lufteinlaß 10 gelegen) eine Temperatur-Überwachungseinheit 13 integriert, welche die bestehende (aktuelle Einblas-)Tempertur der Mischluft (wertmäßig) meßtechnisch mittels Sensoren erfaßt. Gleichfalls wird (werden) die vorhandene(n) Raumtempertur(en) innerhalb (definierter Wärmezonen) der Flugzeugkabine 4 mittels Sensoren, die Bestandteil einer (der Flugzeugkabine 4 integrierten) Kabinentemperatur-Überwachungseinheit 2 sind, meßtechnisch erfaßt.
Die Regelung und Überwachung des Luftmasseregelsystems wird durch die vorerwähnte Regeleinheit 1 betrieben. Sie ist mit der Temperatur-Überwachungseinheit 13, der Kabinentemperatur-Überwachungseinheit 2, der Frischluftregeleinrichtung 3, der Klimaeinrichtung 5, der Luftaufbereitungseinrichtung 6 (genauer: der Mischer- und der Gebläseeinheit, die luftstrombezogen der Luftaufbereitungseinrichtung 6 integriert sind,) und der Heißfrischluft-Regeleinrichtung 16 signalmäßig (informationstechnisch) über Steuerund Signalleitungen verbunden. Die Regeleinheit 1 erledigt (arrangiert) das Regeln (controlling) der vorgenannten Elemente (des Luftmasseregelsystems) aufgrund der von ihnen erhaltenen (abgeforderten) Zustandsinformationen, die sie zunächst erfaßt und danach auswertet (gemeinsam mit den verschiedenen bezogenen aktuellen Systeminformationen vergleicht).

Daraufhin wird das Ergebnis der Auswertung (ausgewerteten Informationen) in entsprechende Informationen (Befehle) signalmäßig umgesetzt, die den betreffenden Elementen (Einrichtungen und Einheiten) zugeleitet werden, worauf diese dann auf den neubestimmten Systemzustand einregeln. Es findet demnach ein ständiger (wechselseitiger) Informationsaustausch zwischen den Elementen und der Regeleinheit 1 statt. Dabei wird die Regeleinheit 1 ständig über die sensorisch ermittelten Ist-Zustände (Einblastemperatur der Mischluft und Kabinentemperatur in die Passagierkabine 4) durch die Temperatur-Überwachungseinheit 13 bzw. Kabinentemperatur-Überwachungseinheit 2 unterrichtet. Außerdem wird die Regeleinheit 1 ständig über die Ist-Zustände der Elemente informiert. Diese erfaßten Ist-Zustände betreffen:
* den [durch wenigstens ein (und in Fig. 1 nicht gezeigtes) Frischluftregelventil (FCV) in Abhängigkeit seiner Ventilposition regulierten] Frischluftmassenstrom, der die Frischluftregeleinrichtung 3 passiert:
* die (mittels einem der Heißfrischluft-Regeleinrichtung 16 integrierten Druckregelventil) kabinendruckangepaßte und mengenmäßige Regulierung der Zufuhr eines Teiles der heißen Frischluft, die in Abhängigkeit der Ventilposition eines (in der Fig. 1 nicht gezeigten und der Heißfrischluft-Regeleinrichtung 16 integrierten) Luftregelventils die Heißfrischluft-Regeleinrichtung 16 passiert, welche sie dem ND-LVN 8 zuleitet;
* die Außlaßtemperatur der konditionierten Frischluft, welche die Klimaeinrichtung 5 verläßt;
* die Drehzahl der Ventilatoren, die die Gebläseeinheit bilden, welche der Luftaufbereitungseinrichtung 6 integriert sind.

Weiterhin berücksichtigt die Regeleinheit 1 die vom Cockpit und / oder vom Kabinenbedienpanel eingespeisten und ihr vorgegebenen Flugzeugsystemdaten (Kabinentemperatur und Passagieranzahl der Passagierkabine, Flughöhe des Passagierflugzeuges sowie diverse weitere definitiv vorgegebene Systemparameter), die sie bei ihrer Auswertung (im Vergleich mit den erfaßten Ist-Zuständen der Elemente) als Sollvorgabe(n) einbezieht.

Dabei sind alle luftstrombezogenen Verbindungen mittels Rohr(luft)leitungen und / oder (Luft-)Kanäle realisiert. Die leitungsmäßigen (informationstechnischen) Verbindungen der Regeleinheit 1 mit den angegebenen Elementen des Luftmasseregelsystems sind mit elektrischen Leitungen (Steuer- oder Signalleitungen) oder optischen Leitungen (Lichtwellenleiter) ausgeführt.

Die Wirkungsweise des (nach Fig. 1) vorgestellten Luftmasseregelsystems für ein Passagierflugzeug mit einer Passagierkabine 4 wird folgendermaßen ablaufen.

Die dem HD-LVN 7 entnommene hochverdichtete heiße Frischluft wird der Frischluftregeleinrichtung 3 eingespeist. Letztere reguliert den (mengenmäßig durch Ventilstellung beeinflußten) Volumenstrom der Frischluft, die danach der Klimaeinrichtung 5 zugeleitet wird. Die Klimaeinrichtung 5 stellt ausgangsseitig die durch sie konditionierte (entspannte und abgekühlte) Frischluft bereit, die dem nachgeschalteten ND-LVN 8 eingespeist wird. Im weiteren entzieht die Luftaufbereitungseinrichtung 6 der Passagierkabine 4 einen Teil der verbrauchten Kabinenluft durch Absaugung. Dieser Kabinenluftanteil wird mit Teilen der konditionierten Frischluft (des ND-LVN 8) innerhalb der Luftaufbereitungseinrichtung 6 gemischt und die dort erhaltene Mischluft über den Lufteinlaß 10 der Passagierkabine 4 eingelassen. Dabei wird der nicht abgesaugte Teil der verbrauchten Kabinenluft über einen zusätzlichen Luftauslaß 93 (outlet) den Flugzeugrumpf nach außerhalb des Passagierflugzeuges verlassen.
Die Regeleinheit 1 regelt (wie vorab beschrieben) auf der Basis ihr signalisierter vorgegebener Flugzeugsystemdaten (Sollgrößen) und (wie vorab beschrieben) ihr signalisierter (erfaßter) Zustands(ver)änderungen des Luftmasseregelsystems (Istgrößen der Temperatur) und (wie vorab beschrieben) ihr von den Elementen (Einrichtungen und Einheiten) des Luftmasseregelsystems signalisierter Zustandsdaten der Elemente (Ist- bzw. Regelgrößen) die Belüftung der Flugzeugkabine 4 mit frischluftaufbereiteter Rezirkulationsluft in Abhängigkeit der Wärmebilanz der höchstbelasteten Kabinentemperaturbereiche. Dabei unterschreitet der Anteil der Frischluftmenge in der Rezirkulationsluft nicht eine geforderte Minimalmenge.

Die Regeleinheit 1 ist so ausgebildet, daß sie in leitender Verbindung mit den Elementen des Luftmasseregelsystems signalmäßig, wie nachfolgend erläutert, kommuniziert.

Danach stellt sie zunächst die vorhandenen und ihr separat signalisierten Zustände der Einrichtungen, insbesondere:
* die bestehende Kabinentemperatur der Passagierkabine 4,
* die vorhandene Lufttemperatur der eingeblasenen Mischluft, die der Passagierkabine 4 rezirkuliert wird,
* den die Frischluftregeleinrichtung 3 passierenden Frischluftmassenstromes, fest.
Danach vergleicht sie diese erfaßten Ist-Zustände mit den ihr signalmäßig eingespeisten Flugzeug(system)daten [Sollwertvorgaben], die sich auf die Vorgaben: Flughöhe des Passagierflugzeuges, Auslastung der Flugzeugkabine 4 mit Passagieren, Kabinentemperatur und gegebenenfalls diverser weiterer Flugdaten- und Kabinenparameter beziehen.
Aus diesem Vergleich ermittelt sie:
* den minimal notwendigen und nicht zu unterschreitenden Frischluftmassenstrom der Frischluftregeleinrichtung 3,
* die minimale Auslaßtemperatur der konditionierten Frischluft der Klimaeinrichtung 5,
* die notwendige Steigerung oder Senkung der Drehzahl der (Ventilatoren der) Gebläseeinheit 61, die der Luftaufbereitungseinheit 6 integriert ist,
   a) zur Erhöhung oder Verringerung der abzusaugenden Kabinenluftmenge aus der Passagierkabine 4 und / oder
   b) zur erhöhten oder verringerten Förderung von aufbereiteter Rezirkulationsluft durch die Luftaufbereitungseinrichtung 6 in die Passagierkabine 4
Dabei wird die auszugleichende Differenzmenge zwischen dem Frischluftmassenstrom, den die Frischluftregeleinrichtung 3 zuführt, und dem (ermittelten) minimalen Frischluftmassenstrom, der durch die Regeleinheit 1 ermittelt wird, durch die (zu Teilen) abgesaugte Kabinenluftmenge, die über die Gebläseeinheit 61 zwangsventiliert wird, ausgeglichen. Daraufhin setzt die Regeleinheit 1 den (ermittelten) minimalen Frischluftmassenstrom und die ermittelte minimale Auslaßtemperatur der konditionierten Frischluft in entsprechende Signale umsetzt, die sie danach der Frischluftregeleinrichtung 3 und der Klimaeinrichtung 5 signalmäßig zuleitet. Die Regeleinheit 1 steuert dabei die Gebläseeinheit 61 signalmäßig an, deren Ventilatoren daraufhin durch Drehzahlsteigerung die (der Passagierkabine 4 einzulassenden Luftfehlmenge) durch Erhöhung des Fördervolumens an abgesaugter Kabinenluft ausgleicht.

Die **Fig.2** zeigt das Luftmasseregelsystem für ein Passagierflugzeuges als Übersichtsschaltbild, mit dem die Darstellung nach der Fig.1 ergänzt wird. Dabei erfolgt eine Abgrenzung der zu belüftenden Passagierkabine 4 in zwei Kabinenabschnitte 41, 42, die zueinander unterschiedlich ausgebildete Temperaturzonen aufweisen und auch getrennt be- und entlüftet werden.
Nach der Darstellung integriert sich das HD-LVN 7 aus den beiden Hochdruckgebläsen 71, 72 der Triebwerke und einem Hochdruckgebläse 73 des Hilfstriebwerkes (APU), welche gemeinsam die außerbords des Flugzeuges angesaugte Luft als hochverdichtete und heiße Frischluft (Zapfluft) in das Leitungsnetz des HD-LVN 7 einspeisen. Dabei wird die Zapfluft der Hochdruckgebläse 71, 72, 73 einer ersten Luftverteilungsstelle (Leitungsverzweigung) 70 des HD-LVN 7 zugeführt, die über eine zweite Luftverteilungsstelle (Leitungsverzweigung) 74 die Frischluftregeleinrichtung 3 erreicht.
Die Frischluftregeleinrichtung 3 besteht aus wenigstens einem Frischluft-Regelventil. Es regelt den Volumenstrom der abgezapften Frischluft, die der nachgeschaltenen Klimaeinrichtung 5 zugeführt wird. Letztere integriert sich aus mehreren Klimaagggregaten (Klimapacks), welche die hochverdichtet zugeführte Frischluft entspannen und die hohe Temperatur (Heißluft) auf ein (verträgliches) niederes Temperaturniveau absenken. Der Klimaeinrichtung 5 ist die (bezüglich der Fig.1 erwähnte) Luftaufbereitungseinheit 6 nachgeschalten, die sich hier aus zwei derartigen Luftaufbereitungseinheiten 66, 67 zusammensetzt, welche die beiden Kabinenabschnitte 41, 42 getrennt ventilieren.
Dabei befindet sich auf dem Leitungszweig der Luftstromverbindungsleitung 12, der die Frischluftregeleinrichtung 3 mit der Klimaeinrichtung 5 verbindet, eine luftstrombezogene Schnittstelle (Verzweigung) 14, die mit zwei Heißfrischluft-Regeleinrichtungen 1601, 1602 verbunden ist.
Den beiden Heißfrischluft-Regeleinrichtungen 1601, 1602 ist eine Luftregel-Ventileinheit 1611, 1612, die wenigstens ein Luftregelventil aufweist, integriert, wobei die erste Heißfrischluft-Regeleinrichtung 1601 zusätzlich mit einer Druckregel-Ventileinheit 162, die wenigstens ein Druckregelventil aufweist, ausgerüstet ist. Dabei wird ein Teil der hochverdichteten heißen Frischluft der Schnittstelle 14 abgezweigt und eingangsseitig der Druckregel-Ventileinheit 162 zugeleitet. Letztere regelt den Druck dieser Frischluft auf ein niederes Niveau, das dem Druckniveau der Kabinenluft der Passagierkabine 4 entspricht.

Die ausgangsseitig der Druckregel-Ventileinheit 162 abgegebene druckangepaßte Frischluft erreicht über eine weitere luftstrombezogene Schnittstelle 173 (Verzweigung) eine erste Luftregel-Ventileinheit 1611, welche die geregelte Menge des Volumenstrom(teil)s der Frischluft (für diesen Luftkreislauf) einer luftstrombezogenen Schnittstelle 151 (Verzweigung) zuleitet, welche auf dem Leitungszweig, der die Klimaeinrichtung 5 mit einer ersten Luftaufbereitungseinrichtung 66 verbindet, liegt. Die der ersten Heißfrischluft-Regeleinrichtung 1601 integrierte Schnittstelle 173 ist luftstrombezogen mit einer der zweiten Heißfrischluft-Regeleinrichtung1602 integrierte Schnittstelle 174 verbunden, der eine zweite Luftregel-Ventileinheit 1612, welche die geregelte Menge des Volumenstrom(teil)s der Frischluft (für diesen Luftkreislauf) einer luftstrombezogenen Schnittstelle 152 (Verzweigung) zuleitet, welche auf dem Leitungszweig, der die zweite Heißfrischluft-Regeleinrichtung 1602 mit einer zweiten Luftaufbereitungseinrichtung 67 verbindet, liegt. Durch diese Maßnahme kann den beiden Luftaufbereitungseinrichtungen 66, 67 zusätzlich abgespannte temperierte Frischluft zugeführt werden, wodurch bei auftretenden Unregelmäßigkeiten der Klimaeinrichtung 5 (der Klimapacks) zusätzlich deren Versorgung mit temperierte Frischluft durch Nachregelung nicht ausgeschlossen wird.

Der Bereich des ND-LVN 8 beginnt (qualitativ) an der Stelle der Abspannung der hochverdichteten heißen Frischluft zu konditionierter (abgespannter, abgekühlter) Frischluft durch die Klimaeinrichtung 5. Im übrigen umfaßt er zwei Luftaufbereitungseinrichtungen 66, 67 und die von ihnen getrennt ventilierten Kabinenabschnitte 66, 67 der Passagierkabine 4. Dabei wird den beiden (getrennten) Kabinenabschnitten 41, 42, deren Trennwand jeweils einen Luftauslaß 91, 92 aufweist, der luftstrombezogen mit jeweils einer drehzahlgeregelten Gebläseeinheit 611, 612 verbunden ist, separat ein Teil der verbrauchten Kabinenluft durch Absaugung entzogen. Dabei ist eine erste Gebläseeinheit 611 ausgangsseitig mit einer ersten luftstrombezogenen Schnittstelle 171 und eine zweite Gebläseeinheit 612 ausgangsseitig mit einer zweiten luftstrombezogenen Schnittstelle 172, denen jeweils eine Mischereinheit integriert ist, verbunden. Zwischen den letztgenannten Schnittstellen 171, 172 und den beiden vorgenannten Schnittstellen 151, 152 besteht eine luftstrombezogene Verbindung. Demnach mischt die betreffende Mischereinheit den Teil zugeleiteter Kabinenluft mit der ihr zugeführten konditionierten Frischluft.

In der betreffenden Trennwand des ersten oder zweiten Kabinenabschnittes 41, 42 ist sitzt jeweils ein Lufteinlaß 101, 102, die den vorgenannten Schnittstellen 171, 172 mit integrierter Mischereinheit luftstrombezogen zugeschalten sind. Demnach wird die mittels der Mischer produzierte aufbereitete Rezirkulationsluft (Mischluft) über die genannte Leitungsverbindung den Lufteinlässen 101, 102 getrennt zugeleitet und in die Kabinenabschnitte 41, 42 eingelassen. Es wird ergänzt, daß der andere Teil der vorhandenen verbrauchten Kabinenluft über jeweils den Trennwänden der Kabinenabschnitte 41, 42 integrierten Abluftventile, die den betreffenden Luftauslaß 931, 932 verschließen, nach außerhalb des Flugzeug(rumpf)es abfließt.

Die Regelung und Überwachung des Luftmasseregelsystems wird - gleichermaßen der Fig. 1 - durch die vorerwähnte Regeleinheit 1 betrieben. Sie ist mit den beiden Temperatur-Überwachungseinheiten 131, 132, den beiden Kabinentemperatur-Überwachungseinheit 21, 22, der Frischluftregeleinrichtung 3, der Klimaeinrichtung 5, den beiden Luftaufbereitungseinrichtungen 66, 67 (genauer: der betreffenden Mischereinheit der Schnittstellen 171, 172 und der betreffenden Gebläseeinheit 611, 612, die luftstrombezogen der ersten und zweiten Luftaufbereitungseinrichtung 66, 67 integriert sind,) und den beiden Heißfrischluft-Regeleinrichtungen 1601, 1602 (genauer den beiden Luftregel-Ventileinheiten 1611, 1612) signalmäßig (informationstechnisch) über Signalleitungen 12 (Datenleitungen), die teilweise über Signalleitungsverzweigungen 181 bis 188 verknüpft sind, bevor die Regeleinheit 1 mit den aufgezählten Elementen signalmäßig (datenmäßig) (lichttechnisch oder elektrisch leitend) verschalten sind, sie verbunden. Die Verschaltung ist genauer dem Übersichtsschaltbild nach Fig. 2 zu entnehmen.

Dem betreffenden Leitungszweig, der mit dem Lufteinlaß 101, 102 des betreffenden Kabinenabschnittes 41, 42 verbunden ist, ist dabei (nahe dem Lufteinlaß 101, 102) jeweils eine entsprechende luftstrombezogene Schnittstelle mit integrierter (Rohr-)Temperatur-Überwachungseinheit 131, 132 (Sensoreinheit) installiert. Damit wird die bestehende (aktuelle Einblas-)temperatur der rezirkulierten Mischluft (wertmäßig) meßtechnisch mittels Sensoren erfaßt. Ebenso werden die vorhandenen Raumtemperturen - innerhalb (definierter Wärmezonen) der (Flugzeug-) Kabinenabschnitte 41, 42 mittels Sensoren, die Bestandteil der (den Kabinenabschnitten 41, 42) integrierten) ersten und zweiten Kabinentemperatur-Überwachungseinheit 21, 22 sind, meßtechnisch erfaßt.

Diese Regeleinheit 1 erledigt (arrangiert) das Regeln (controlling) der vorgenannten Elemente (des Luftmasseregelsystems) aufgrund der von ihnen erhaltenen (abgeforderten) Zustandsinformationen, die sie zunächst erfaßt und danach auswertet (gemeinsam mit den verschiedenen bezogenen aktuellen Systeminformationen vergleicht). Daraufhin wird das Ergebnis der Auswertung (ausgewerteten Informationen) in entsprechende Informationen (Befehle) signalmäßig umgesetzt, die den betreffenden Elementen (Einrichtungen und Einheiten) zugeleitet werden, worauf diese dann auf den neubestimmten Systemzustand einregeln. Es findet demnach ein ständiger (wechselseitiger) Informationsaustausch zwischen den Elementen und der Regeleinheit 1 statt. Dabei wird die Regeleinheit 1 ständig über die sensorisch ermittelten Ist-Zustände:
* Rohrtemperatur des dem ersten und zweiten Lufteinlasses 101, 102 zugeschaltenen Leitungszweiges (Einblastemperatur der Mischluft) durch die erste und zweite Temperatur-Überwachungseinheit 131, 132 und
* Kabinentemperatur in den Kabinenabschnitten 41, 42 durch die erste und zweite Kabinentemperatur-Überwachungseinheit 21, 22
unterrichtet.
Außerdem wird die Regeleinheit 1 ständig über die Ist-Zustände der Elemente informiert. Diese gleichermaßen bezüglich der Fig. 1 vorgenannten Ist-Zustände betreffen:
* den Frischluftmassenstrom (in Abhängigkeit der Ventilposition des Frischluftregelventils (FCV) der Frischluftregeleinrichtung 3;
* die Ventilposition der ersten und zweiten Luftregel-Ventileinheit 1611, 1612 der ersten und zweiten Heißfrischluft-Regeleinrichtung 1601, 1602;
* die Auslaßtemperatur der konditionierten Frischluft, welche die Klimaeinrichtung 5 (Klimapacks) verläßt;
* die Drehzahl der ersten und zweiten Gebläseeinheit 611, 612, welche Bestandteil der ersten und zweiten Luftaufbereitungseinheit 66, 67 sind.

Weiterhin werden - wie zu Fig. 1 angegeben - der Regeleinheit 1 über Signalleitungen 12 (Datenleitungen) zugeleiteten Flugzeug-Systemdaten als Sollwertvorgaben (Flughöhe, Kabinentemperatur, Passagieranzahl und weitere Systemparameter) zugeleitet, die sie dann auch bei ihrer Auswertung (im Vergleich mit den erfaßten Ist-Zuständen der Elemente) als Sollvorgabe(n) einbezieht.

Die nachfolgende Ausführung charakterisiert zusammenfassend die im vorgestellten Luftmasseregelsystem für ein Passagierflugzeug (nach den Figuren 1 und 2) integrierte Regeleinheit 1. Danach ermittelt die Regeleinheit 1 über Sensoren die momentane(n) herschende(n) Kabinentemperatur(en) innerhalb der Passagierkabine 4 (der Kabinenabschnitte 41, 42), die Einblastemperaturen der Niedrigdruckluftverteilung in der Passagierkabine 4 (in den Kabinenabsschnitten 41, 42) und den Massenstrom der hochverdichteten heißen Frischluft durch die Frischluftregeleinrichtung 3 (das Frischluftregelventil). Aus diesen Parametern und einer vorgegebenen Luftmassenstromaufteilung ermittelt die Regeleinrichtung 1 die zugehörigen Wärmeströme der einzelnen Temperaturzonen der n-zähligen Kabinenabschnitte (beispielgemäß: der beiden Kabinenabschnitte 41, 42). Die Temperaturzone mit dem größten Wärmestrom benötigt dabei die niedrigste Einblastemperatur in den betreffenden Kabinenabschnitt 41 oder 42. Nachfolgend ermittelt die Regeleinrichtung 1 die minimale Kühlaggregatauslaßtemperatur, die einen schnee- und / oder eisfreien Frischluftstrom (einen Querschnitt der Luftverbindungsleitungen 11 im Bereich des ND-LVN 8) sicherstellt. Aus den Parametern: " größter Wärmestrom der im Bereich des HD-LVN 7 strömenden Frischluft, gewählte Kabinentemperatur im Bereich der Kabinenabschnitte 41, 42 und kleinste Kühlaggregatauslaßtemperatur der Klimaeinrichtung 5 " ermittelt die Regeleinrichtung 1 den minimalen Luftmassenstrom, um durch [kontinuierliche Überwachung und (Nach-)Regelung] die Wärmebilanz der höchstbelasteten Temperatur- bzw. Kabinenbereiche 41, 42 auszugleichen. Dieser Luftmassenstrom wird mit dem (nach den Zulassungsvorschriften für Passagierflugzeuge) geforderten minimalen Luftmassenstrom verglichen, der nicht unterschritten werden darf. Nach dem Vergleich wird dem Frischluftregelventil (FCV) der Frischluftregeleinrichtung 3 der ermittelte Luftmassenstrom durch die Regeleinrichtung 1 als Sollwert vorgegeben, auf dem das Frischluftregelventil einregelt. Auch die ermittelte minimale Kühlaggregatauslaßtemperatur wird durch die Regeleinrichtung 1 dem Kühlaggregat der Klimaeinrichtung 5 aufgegeben, welches dann die minimale Auslaßtemperatur einregelt. Um eine gewünschte Kabinenluftdurchströmung zu erreichen, wird der gesparte Frischluftmassenstrom durch den Teil der rezirkulierten (abgesaugten) Kabinenluft ersetzt. Hierzu steuert die Regeleinheit 1 das drehzahlgeregelte Gebläse der Gebläseeinheit 61, 611, 612 an, welches den benötigten Rezirkulationsluftmassenstrom fördert. Dabei wird der vorbeschriebene Prozeß ständig wiederholt (Regelkreis des Gesamtsystems).

Mit dieser Maßnahme wird verhindert, daß keine Querschnittsverengung der Luftstromverbindungsleitungen 11 an strömungskritischen Stellen oder Bauteilen für das stromabwärts liegende ND-LVN 8 im Flugzeug durch Eis oder Schnee eintritt. Ohne diese Maßnahme können derartige lokal verursachte Querschnittsverengungen bis zu Vollsperrungen des Luftströmungsquerschnittes führen, wodurch sich katastrophale Leitungs- bzw. Rohrbrüche im ND-LVN 8 kaum vermeiden lassen. Dadurch wird gegenüber der Verursachung von Geräuschen, die sich durch den Eis- und Schneebefall des Strömungsquerschnittes einstellen würden, vorgebeugt. Derartig verursachte Verengungen des Strömungsquerschnittes würden besonders dann eintreffen, wenn parallel zu der Reduzierung des Frischluftvolumenstromes auf die Zulassungsminimalmenge (bei bestehender eingeschränkter Kühlaggregatleistung) die notwendige Klimaaggregatauslaßtemperatur unter den Wassergefrierpunkt sinkt und der Luftvolumenstrom noch eine Restfeuchte besitzt. Durch die maßnahmengerechte Umsetzung wird auch aufgrund der Minimierung (gebremste Zufuhr) des Frischluftstromes in Abhängigkeit des mit dem Flugprofil korrelierenden Flugzeugparameter eine Senkung des Treibstoffverbrauches erreicht.

## Patentansprüche

1. Klimaregelsystem eines Passagierflugzeuges mit einer Passagierkabine (4), bei dem eine Klimaeinrichtung (5) eingangsseitig mit einer Frischluftregeleinrichtung (3) verbunden ist, die mit einem Hochdruck-Luftverteilungsnetz (7) in Verbindung steht, wobei letzteres hochverdichtete heiße Frischluft einspeist, den die Frischluftregeleinrichtung (3) zur Klimaeinrichtung (5) weiterleitet, bei dem letztere ausgangsseitig mit einem Niederdruck-Luftverteilungsnetz (8) verbunden ist, welchem sie entspannte und abgekühlte Frischluft als konditionierte Frischluft einspeist, mit dem wenigstens eine Luftaufbereitungseinrichtung (6) verbunden ist, die eingangsseitig mit einem der Passagierkabinenwand eingelassenen Luftauslass (9) in Verbindung steht und darüber einen Teil der verbrauchten Kabinenluft als Rezirkulationsluft absaugt, wobei die Luftaufbereitungseinrichtung (6) eine Gebläseeinheit (61) aufweist, welche die Absaugung der Rezirkulationsluft realisiert, bei dem die Luftaufbereitungseinheit (6) ausgangsseitig mit einem der Passagierkabinenwand eingelassenen Lufteinlass (10) verbunden ist, über den der Passagierkabine (4) Mischluft als aufbereitete Rezirkulationsluft eingeblasen wird, und in der Passagierkabine (4) eine Kabinentemperatur-Überwachungseinheit (2) und innerhalb der dem Lufteinlass (10) zugeschalteten luftstrombezogenen Verbindung eine Rohrtemperatur-Überwachungseinheit (13) angeordnet sind, mit denen die Regeleinheit (1) leitend verbunden ist, wobei die Kabinentemperatur-Überwachungseinheit (2) die bestehenden Kabinentemperaturen und die Rohrtemperatur-Überwachungseinheit (13) die bestehenden Temperaturen der eingeblasenen Mischluft erfasst und der Regeleinheit (1) signalmäßig zuleitet, bei der die Luftaufbereitungseinrichtung (6) mit der Regeleinheit (1) leitend verbunden ist, wobei die Luftaufbereitungseinrichtung (6) die betreffende Drehzahl der Gebläseeinheit (61) an die Regeleinheit (1) signalmäßig zuleitet, dabei die Regeleinheit (1) zum Feststellen der vorhandenen und ihr separat signalisierten Zustände der bestehenden Kabinentemperatur der Passagierkabine (4) und der vorhandenen Lufttemperatur der in die Passagierkabine (4) eingeblasenen Mischluft ausgebildet ist,
**dadurch gekennzeichnet, dass** die Regeleinheit (1) außerdem mit der Frischluftregeleinrichtung (3), wobei letztere eine Zustandsinformation über den sie passierenden Frischluftmassenstrom an die Regeleinheit (1) signalisiert, und mit der Klimaeinrichtung (5), wobei letztere eine Zustandsinformation über die vorhandene Auslasstemperatur der konditionierten Frischluft an die Regeleinheit (1) signalisiert, und mit entsprechenden Signalleitungen (12) vom Cockpit und vom Kabinenpanel leitend verbunden ist, wobei diese Signalleitungen (12) vorgegebene Flugzeug-Systemdaten als Sollwertvorgaben übertragen, die auf die Flughöhe des Passagierflugzeuges, auf die Kabinentemperatur und auf die Passagieranzahl der Passagierkabine (4) sowie auf weitere vorgegebene Systemparameter bezogen sind,
und die Regeleinheit (1) außerdem zum Feststellen des vorhandenen und separat ihr signalisierten Zustandes des die Frischluftregeleinrichtung (3) passierenden Frischluftmassenstromes geeignet ist, die femer zum Vergleich der separat signalisierten Zustande mit den als Sollwertvorgaben vorgegebenen Flugzeug-Systemdaten, die sich auf einen kabinenintem minimal notwendigen Frischluftanteil der Mischluft pro Flugzeugpassagier, auf entsprechende Kriterien für eine anlagenspezifisch und vom Frischluftdurchsatz abhängige minimale Auslasstemperatur der konditionierten Frischluft der Klimaeinrichtung (5) sowie auf eine sich aus der Wännebilanzbetrachtung der Passagierkabine (4) ergebende Mischlufttemperatur und damit auf eine notwendige Rezirkulationsluftmenge an Mischluft, die durch die Drehzahlsteuerung der Gebläseeinheit (61) erreicht wird, beziehen, welche mit der entsprechenden Flughöhe des Passagierflugzeuges und der Auslastung der Flugzeugkabine (4) mit Passagieren sowie mit einer vorgegebenen Kabinentemperatur korrelieren, und daraus zur Ermittlung des minimal notwendigen und nicht zu unterschreitenden Frischluftmassenstromes der Frischluftregeleinrichtung (3) sowie der minimalen Auslasstemperatur der konditionierten Frischluft der Klimaeinrichtung (5) und der notwendigen Steigerung der Drehzahl der Gebläseeinheit (61) zur Erhöhung der abgesaugten Kabinenluftmenge und erhöhten Förderung von Mischluft durch die Luftaufbereitungseinrichtung (6) in die Passagierkabine (4) ausgebildet ist, dabei die Regeleinheit (1) zum Ersetzen der Differenzmenge zwischen dem die Frischluftregeleinrichtung (3) passierenden und dem ermittelten minimalen Frischluftmassenstrom durch die abgesaugte Kabinenluftmenge und / oder zum Einregeln der Mischluft auf ein vorbestimmtes Temperatumiveau befähigt ist, die daraufhin zur Umsetzung des ermittelten minimalen Frischluftmassenstromes und der ermittelten minimalen Auslasstemperatur der konditionierten Frischluft und der Temperatur der Mischluft in entsprechende Signale geeignet ist, die sie danach der Frischluftregeleinrichtung (3) und der Klimaeinrichtung (5) signalisiert, wobei die Regeleinheit (1) die Gebläseeinheit (61) signalmäßig ansteuert, die daraufhin durch Drehzahlsteigerung die der Passagierkabine (4) eingelassene Luftfehlmenge und / oder die Temperatur der in die Passagierkabine (4) eingeblasenen Mischluft auf das ihr vorbestimmte Temperaturniveau durch Erhöhung des Fördervolumens an abgesaugter Kabinenluft ausgleicht.

2. Klimaregelsystem nach Anspruch 1, **dadurch gekennzeichnet, dass** der Klimaeinrichtung (5) zusätzlich luftstrombezogen eine Heißfrischluft-Regeleinrichtung (16) parallel geschalten ist.

3. Klimaregelsystem nach Anspruch 2, **dadurch gekennzeichnet, dass** die Heißfrischluft-Regeleinrichtung (16) wenigstens aus einer Luftregel-Ventileinheit (161) besteht, die mit der Regeleinheit (1) leitend verbunden ist, wobei die Ventileinheit (161) der Regeleinheit (1) die vorhandene Ventilposition signalmäßig zuleitet.

4. Klimaregelsystem nach Anspruch 2, **dadurch gekennzeichnet, dass** die Heißfrischluft-Regeleinrichtung (16) aus einer Luftregel-Ventileinheit (161) und einer Druckregel-Ventileinheit (162) besteht, bei der beide Einheiten luftstrombezogen in Reihe verbunden sind, wobei die Luftregel-Ventileinheit (161) der Regeleinheit (1) die vorhandene Ventilposition signalmäßig zuleitet.

5. Klimaregelsystem nach Anspruch 1, **dadurch gekennzeichnet, dass** die Passagierkabine (4) aus mehreren Kabinenabschnitten (41, 42) zusammengesetzt ist, die zueinander abgeschottet sind, in denen jeweils eine Temperatur-Überwachungseinheit (21, 22) angeordnet ist, die mit der Regeleinheit (1) leitend verbunden sind, wobei sie separat die bestehende Kabinenabschnittstemperatur erfassen und der Regeleinheit (1) signalmäßig zuleiten, und dass jeder Kabinenabschnitt (41, 42) einen Lufteinlass (101, 102) und einen Luftauslass (91, 92) aufweist, die luftstrombezogen und separat mit einer Luftaufbereitungseinheit (66, 67) verbunden sind, die dem Niederdruck-Luftverteilungsnetz (8) luftstrombezogen zugeschalten sind, wobei jeder luftstrombezogenen Verbindung nahe dem betreffenden Lufteinlass (101, 102) jeweils eine Rohrtemperatur-Überwachungseinheit (131, 132) zugeordnet ist, die mit der Regeleinheit (1) leitend verbunden sind, wobei sie separat die bestehende Temperatur der eingeblasenen Rezirkulationsluft erfassen und der Regeleinheit (1) signalmäßig zuleiten, und dass die den Luftaufbereitungseinheiten (66, 67) integrierten Gebläseeinheiten (611, 612) mit der Regeleinheit (1) leitend verbunden sind, wobei sie separat ihre betreffende Drehzahl an die Regeleinheit (1) signalmäßig zuleiten und letztere sie separat signalmäßig ansteuert.

6. Klimaregelsystem nach den Ansprüchen 2 bis 4 und 5, **dadurch gekennzeichnet, dass** mit dem betreffenden luftstrombezogenen Leitungszweig, über den die konditionierte Frischluft den Eingang der ihm zugeordneten Luftaufbereitungseinheit (66, 67) erreicht, jeweils eine Luftregel-Ventileinheit (1611, 1612) ausgangsseitig verbunden ist, die mit der Regeleinheit (1) leitend verbunden sind, wobei die Ventileinheiten (1611, 1612) der Regeleinheit (1) die vorhandene Ventilposition signalmäßig zuleiten, deren eingangsseitig zugeordneten Leitungszweige in eine luftstrombezogene Schnittstelle münden, die dem Leitungszweig, welcher der Klimaeinrichtung (5) vorgeordnet ist, zugeschalten ist, wobei zwischen der Schnittstelle und diesem Leitungszweig die Druckregel-Ventileinheit (162) geschalten ist, welche auf die Druckverhältnisse des Niederdruck-Verteilungsnetzes (8) regelt.

7. Klimaregelsystem nach Anspruch 1, **dadurch gekennzeichnet, dass** die Temperatur-Überwachungseinheit (2) und die Rohrtemperatur-Überwachungseinheit (13) aus wenigstens einem Sensor, der Temperaturen erfasst und in Signale umsetzt, besteht, wobei die Rohrtemperatur-Überwachungseinheit (13) nahe dem Lufteinlass (10) installiert ist.

8. Verfahren zur Klimatisierung einer Flugzeug-Passagierkabine, bei dem die Klimatisierung eines Passagierraumes durch eine vordefinierte Luftmassenstromaufteilung beeinflusst wird, wobei folgende Schritte zur geregelten Belüftung der Passagierkabine (4) vorgelagert werden, so dass danach die von einem Hochdruck-Luftverteilungsnetz (7) eingespeiste hochverdichtete heiße Frischluft luftstrombezogen einer Frischluftregeleinrichtung (3) zugeführt wird, der die Frischluftregeleinrichtung (3) kontrolliert passiert und luftstrombezogen einer Klimaeinrichtung (5) zugeleitet wird, dort entspannt und abgekühlt wird und danach als konditionierte Frischluft einem Niederdruck-Luftverteilungsnetz (8) eingespeist wird, die dann luftstrombezogen einer Luftaufbereitungseinrichtung (6) zugeführt wird, in der sie mit einem Teil der verbrauchten Kabinenluft, die der Passagierkabine (4) mittels einer der Luftaufbereitungseinrichtung (6) integrierten Gebläseeinheit (61) als Rezirkulationsluft abgesaugt wird, gemischt wird, und danach die in der Luftaufbereitungseinrichtung (6) erhaltene Mischluft als aufbereitete Rezirkulationsluft in die Passagierkabine (4) eingelassen wird, wobei die räumlich bestehenden Kabinentemperaturen der Passagierkabine (4) durch eine Kabinentemperatur-Überwachungseinheit (2) erfasst werden und die Temperatur der Mischluft, die der Passagierkabine (4) zugeführt wird, durch eine Rohrtemperatur-Überwachungseinheit (13) erfaßt wird sowie die betreffende Drehzahl der Gebläseeinheit (61), mit der die Absaugung des Teiles der verbrauchten Kabinenluft betrieben wird, erfasst wird, bei dem eine Regeleinheit (1), welcher die von den Einrichtungen und Einheiten erfassten Zustandsänderungen signalmäßig zugeleitet werden, der zusätzlich vom Cockpit und / oder von einem Kabinenpanel vordefinierte Flugzeug-Systemdaten signalmäßig eingespeist werden, aufgrund des Ergebnisses der verglichenen Informationen die Einrichtungen elektronisch ansteuern und regeln wird,
**gekennzeichnet durch folgende Merkmale,**
- dass die vorhandene Auslasstemperatur der konditionierten Frischluft, welche die der Frischluftstrom ausgangsseitig der Klimaeinrichtung (5) besitzt, erfasst wird,
- dass der Frischluftmassenstrom, der die Frischluftregeleinrichtung (3) passiert, mengenmäßig erfasst wird,
- dass die Regeleinheit (1) die ihr zugeleiteten Zustandsgrößen mit entsprechenden Kriterien der vordefinierten Flugzeug-Systemdaten, die sich auf einen kabinenintem minimal notwendigen Frischluftanteil der Mischluft pro Flugzeugpassagier, auf eine anlagenspezifisch und vom Frischluftdurchsatz abhängige minimale Auslasstemperatur der konditionierten Frischluft der Klimaeinrichtung (5) sowie auf eine sich aus der Wärmebilanzbetrachtung der Passagierkabine (4) ergebende Mischlufttemperatur und damit auf eine notwendige Rezirkulationsluftmenge an Mischluft, die **durch** die Drehzahlsteuerung der Gebläseeinheit (61) erreicht wird, beziehen, welche insbesondere mit der entsprechenden Flughöhe des Passagierflugzeuges und der Auslastung der Flugzeugkabine mit Passagieren sowie mit der vordefinierten Kabinentemperatur korrelieren werden, signalmäßig vergleichen wird und daraus minimal notwendige Zustandsgrößen ermitteln wird, mit denen Veränderungen der mengenmäßige Zufuhr der hochverdichteten heißen Frischluft zur Klimaeinrichtung (5) und der Auslasstemperatur der konditionierten Frischluft ausgangs der Klimaeinrichtung (5) erreicht werden, die dann den betreffenden Einrichtungen signalmäßig zugeleitet werden, die daraufhin luftstrombezogen die minimal notwendigen Zustandsgrößen einregeln,
- dass gleichzeitig die Differenzmenge der Frischluftzufuhr, welche sich aus der erfassten und der minimal notwendigen Zustandsgröße ergibt, **durch** die Regeleinheit (1) ermittelt und danach der Gebläseeinheit (61) signalmäßig zugeleitet wird, daraufhin deren Drehzahl gesteigert wird, wodurch die luftstrombezogen in die Passagierkabine (4) eingelassene Fehlluftmenge und / oder die Temperatur der eingeblasenen Mischluft auf ein ihr vorbestimmtes Temperatumiveau **durch** Erhöhung des Fördervolumens abgesaugter Kabinenluft ausgeglichen wird, die der konditionierten Frischluft beigegeben wird.

9. Verfahren nach Anspruch 8, **dadurch gekennzeichnet, dass** die Kabinentemperaturen, die Temperatur der Mischluft und die Auslasstemperatur der konditionierten Frischluft sensorisch erfasst werden und danach in elektronische Signale oder Lichtsignale gewandelt werden.

10. Verfahren nach Anspruch 8, **dadurch gekennzeichnet, dass** die Drehzahl der Gebläseeinheit (61) und die Ventilstellung der Frischluftregeleinrichtung (3) elektronisch erfasst und danach in elektronische Signale oder Lichtsignale gewandelt wird.

11. Verfahren nach Anspruch 8, **dadurch gekennzeichnet, dass** die vordefinierten Flugzeugdaten elektronisch oder optisch eingespeist werden.

12. Verfahren nach Anspruch 8, **dadurch gekennzeichnet, dass** die Verarbeitung der durch die Regeleinheit (1) erfassten Signale elektronisch oder nach vorgelagerter optoelektronischer Wandlung elektronisch realisiert wird und die ergebnisrelevant abgegebenen Signale in elektronische Signale oder Lichtsignale gewandelt und den Einrichtungen oder Einheiten zugeleitet werden.

13. Verfahren nach Anspruch 8, **dadurch gekennzeichnet, dass** die kontrollierte hochverdichtete heiße Frischluft zusätzlich zu einem Teil abgezweigt wird, danach auf einen niederen Druck, dem die konditionierte Frischluft entspricht, geregelt wird, und dann mengenmäßig geregelt den einer Passagierkabine (4) aufgeteilten Kabinenabschnitten über letzteren luftstrombezogen zugeordnete Luftaufbereitungseinrichtungen zugeleitet wird, und dass eine Luftfehlmenge, die sich infolge der vordefinierten Flugzeug-Systemdaten nach vorgelagertem elektronischen Vergleich mit den durch die Regeleinheit (1) erfassten Signalen ergibt, durch die Erhöhung des Fördervolumens an abgesaugter Kabinenluft ausgeglichen und mit der konditionierten Frischluft gemischt als aufbereitete Rezirkulationsluft der Passagierkabine oder den Kabinenabschnitten der Passagierkabine eingelassen wird.

## Claims

1. Climate control system of a passenger aircraft with a passenger cabin (4), in which an air conditioning device (5) is connected on the input side to a fresh air control device (3), which is connected to a high-pressure air distribution network (7), the latter supplying highly compressed warm fresh air that the fresh air control device (3) conveys to the air conditioning device (5), in which the latter is connected on the output side to a low-pressure air distribution network (8), to which it supplies expanded and cooled fresh air as conditioned fresh air and connected to which is at least one air processing device (6), which is connected on the input side to an air outlet (9) let into the wall of the passenger cabin and via this removes a portion of the used cabin air by suction as recirculation air, the air processing device (6) having a fan unit (61) that achieves the removal by suction of the recirculation air, in which the air processing unit (6) is connected on the output side to an air inlet (10) let into the wall of the passenger cabin, via which inlet mixed air is blown into the passenger cabin (4) as processed recirculation air, and arranged in the passenger cabin (4) is a cabin temperature monitoring unit (2) and arranged inside the airflow connection connected to the air inlet (10) is a tube temperature monitoring unit (13), to which units the control unit (1) is connected conductively, the cabin temperature monitoring unit (2) detecting the cabin temperatures existing and the tube temperature monitoring unit (13) detecting the existing temperatures of the mixed air blown in and forwarding these in the manner of a signal to the control unit (1), in which the air processing device (6) is connected conductively to the control unit (1), the air processing device (6) forwarding the relevant speed of the fan unit (61) to the control unit (1) in the manner of a signal, with the control unit (1) being formed to determine the present states, signalled separately to it, of the cabin temperature existing in the passenger cabin (4) and the present air temperature of the mixed air blown into the passenger cabin (4), **characterized in that** the control unit (1) is also connected conductively to the fresh air control device (3), the latter signalling status information concerning the mass flow of fresh air passing it to the control unit (1), and to the air conditioning device (5), the latter signalling status information concerning the existing outlet temperature of the conditioned fresh air to the control unit (1), and to corresponding signal lines (12) from the cockpit and the cabin panel, these signal lines (12) transmitting predetermined aircraft system data as setpoint entries that are related to the flying altitude of the passenger aircraft, to the cabin temperature and to the number of passengers in the passenger cabin (4) as well as to other predetermined system parameters, and the control unit (1) also being suitable for determining the present state, signalled to it separately, of the mass flow of fresh air passing the fresh air control device (3), and also being formed to compare the separately signalled states with the aircraft system data predetermined as setpoint entries, which relate to a minimum required content of fresh air in the mixed air per passenger inside the cabin, to suitable criteria for a system-specific minimum outlet temperature, dependent on fresh air throughput, of the conditioned fresh air of the air conditioning device (5) as well as to a mixed air temperature resulting from consideration of the thermal balance in the passenger cabin (4) and thus to a required quantity of recirculation air in the mixed air, which is achieved through speed control of the fan unit (61), which correlate to the corresponding flying altitude of the passenger aircraft and the passenger loading in the aircraft cabin (4) and to a predetermined cabin temperature, and from this to ascertain the minimum required fresh air mass flow of the fresh air control device (3), below which level the mass flow may not fall, as well as the minimum outlet temperature of the conditioned fresh air of the air conditioning device (5) and the increase in the speed of the fan unit (61) required to increase the amount of cabin air removed by suction and for increased transportation of mixed air through the air processing device (6) into the passenger cabin (4), with the control unit (1) being capable of replacing the difference between the fresh air mass flow passing the fresh air control device (3) and the minimum fresh air mass flow ascertained by means of the amount of cabin air removed by suction and/or of adjusting the mixed air to a preset temperature level, and being suitable thereupon to convert the minimum fresh air mass flow ascertained and the minimum outlet temperature of the conditioned fresh air ascertained and the temperature of the mixed air into corresponding signals, which it then signals to the fresh air control device (3) and the air conditioning device (5), the control unit (1) activating the fan unit (61) by signal means, which unit thereupon equalizes the shortfall of air let into the passenger cabin (4) by increasing the speed and/or equalizes the temperature of the mixed air blown into the passenger cabin (4) to its preset temperature level by increasing the conveying volume of cabin air removed by suction.

2. Climate control system according to claim 1, **characterized in that** the air conditioning device (5) is also connected in parallel relative to the flow of air to a warm fresh air control device (16).

3. Climate control system according to claim 2, **characterized in that** the warm fresh air control device (16) comprises at least one air control valve unit (161), which is connected conductively to the control unit (1), _the valve unit (161) supplying the present valve position to the control unit (1) in the manner of a signal.

4. Climate control system according to claim 2, **characterized in that** the warm fresh air control device (16) consists of an air control valve unit (161) and a pressure regulating valve unit (162), with both units being connected in series relative to the airflow, the air control valve unit (161) supplying the present valve position to the control unit (1) in the manner of a signal.

5. Climate control system according to claim 1, **characterized in that** the passenger cabin (4) is composed of several cabin sections (41, 42), which are partitioned off from one another, arranged in each of which is a temperature monitoring unit (21, 22), which are connected conductively to the control unit (1) and detect the cabin section temperature existing separately and supply it to the control unit (1) in the manner of a signal, and that each cabin section (41, 42) has an air inlet (101, 102) and an air outlet (91, 92), which are connected relative to the airflow and separately to an air processing unit (66, 67), which are connected relative to the airflow to the low-pressure air distribution network (8), each airflow-related connection being assigned a tube temperature monitoring unit (131, 132) respectively close to the relevant air inlet (101, 102), which monitoring units are connected conductively to the control unit (1), these units separately detecting the existing temperature of the recirculation air blown in and supplying it to the control unit_ (1) in the manner of a signal, and that the fan units (611, 612) integrated into the air processing units (66, 67) are connected conductively to the control unit (1), supplying their relevant speed separately to the control unit (1) in the manner of a signal and the latter activating them separately by signal.

6. Climate control system according to claims 2 to 4 and 5, **characterized in that** connected on the output side of the relevant airflow-related line branch, via which the conditioned fresh air reaches the input of the air processing unit (66, 67) assigned to it, is an air control valve unit (1611, 1612) in each case, which units are connected conductively to the control unit (1), the valve units (1611, 1612) signalling the present valve position to the control unit (1), the line branches assigned to them on the input side opening into an airflow-related interface that is connected to the line branch arranged ahead of the air conditioning device (5), the pressure regulating valve unit (162) being connected between the interface and this line branch, which valve adjusts to the pressure ratios of the low-pressure distribution network (8).

7. Climate control system according to claim 1, **characterized in that** the temperature monitoring unit (2) and the tube temperature monitoring unit (13) comprise at least one sensor that detects temperatures and converts them into signals, the tube temperature monitoring device (13) being installed close to the air inlet (10).

8. Method for climate control of an aircraft passenger cabin, in which the climate control of a passenger compartment is influenced by a predefined division of the air mass flow, the following steps being pre-stored for controlled ventilation of the passenger cabin (4), so that according to these the highly compressed warm fresh air supplied by a high-pressure air distribution network (7) is supplied relative to the airflow to a fresh air control device (3), passes the fresh air control device (3) in a controlled manner and is forwarded airflow-related to an air conditioning device (5), is expanded and cooled there and then supplied as conditioned fresh air to a low-pressure air distribution network (8), is then supplied airflow-related to an air processing device (6), in which it is mixed with a portion of the used cabin air that is removed from the passenger cabin (4) as recirculation air by suction by means of a fan unit (61) integrated into the air processing device (6), and then the mixed air obtained in the air processing device (6) is let into the passenger cabin (4) as processed recirculation air, the cabin temperatures physically existing in the passenger cabin (4) being detected by a cabin temperature monitoring device (2) and the temperature of the mixed air supplied to the passenger cabin (4) being detected by a tube temperature monitoring unit (13) as well as the relevant speed of the fan unit (61), with which the removal by suction of a portion of the used cabin air is undertaken, being detected, in which a control unit (1), to which the changes of state detected by the devices and units are sent in the manner of a signal, and to which additionally predefined aircraft system data are supplied in the manner of a signal by the cockpit and/or by a cabin panel, will electronically activate and control the devices on the basis of the result of the information compared, **characterized by** the following features,
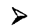 that the present outlet temperature of the conditioned fresh air that the fresh air flow has on the output side of the air conditioning device (5) is detected,
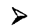 that the fresh air mass flow that passes the fresh air control device (3) is detected in terms of quantity,
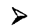 that the control unit (1) will compare in signal terms the state variables supplied to it with corresponding criteria of the predefined aircraft system data that relate to a cabin-internal minimum required fresh air content of the mixed air per passenger, to a system-specific minimum outlet temperature, dependent on the fresh air throughput, of the conditioned fresh air of the air conditioning device (5) as well as to a mixed air temperature resulting from consideration of the thermal balance in the passenger cabin (4) and thus to a required quantity of recirculation air to mixed air, which is achieved by speed control of the fan unit (61), which will correlate in particular to the corresponding flying altitude of the passenger aircraft and the loading of the aircraft cabin with passengers as well as to the predefined cabin temperature, and from these will ascertain minimum state quantities required with which changes in the quantity of highly compressed warm fresh air supplied to the air conditioning device (5) and in the outlet temperature of the conditioned fresh air at the exit of the air conditioning device (5) are achieved, which quantities are then supplied to the relevant devices in the manner of a signal, which devices thereupon adjust the minimum required state quantities relative to the airflow,
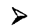 that at the same time the amount of difference in the fresh air supply resulting from the detected and minimum required state quantity is ascertained by the control unit (1) and then supplied to the fan unit (61) in the manner of a signal, the speed of which fan unit is increased thereupon, due to which the shortfall of air introduced into the passenger cabin (4) and/or the temperature of the mixed air blown in is equalized to a predetermined temperature level for it by increasing the conveying volume of cabin air removed by suction, which is added to the conditioned fresh air.

9. Method according to claim 8, **characterized in that** the cabin temperatures, the temperature of the mixed air and the outlet temperature of the conditioned fresh air are detected by sensor and then converted into electronic signals or light signals.

10. Method according to claim 8, **characterized in that** the speed of the fan unit (61) and the valve position of the fresh air control device (3) are detected electronically and then converted into electronic signals or light signals.

11. Method according to claim 8, **characterized in that** the predefined aircraft data are supplied electronically or optically.

12. Method according to claim 8, **characterized in that** the processing of the signals detected by the control unit (1) is realized electronically or electronically following upstream optoelectronic conversion and the signals emitted relevant to the result are converted into electronic signals or light signals and supplied to the devices or units.

13. Method according to claim 8, **characterized in that** the controlled highly compressed warm fresh air is branched off additionally to a portion, then adjusted to a lower pressure to which the conditioned fresh air corresponds, and then supplied controlled in terms of quantity to the divided cabin sections of a passenger cabin (4) via air processing devices assigned to the latter relative to the airflow, and that a shortfall of air yielded as a result of the predefined aircraft system data following upstream electronic comparison with the signals detected by the control unit (1) is equalized by increasing the conveying volume of cabin air removed by suction and mixed with the conditioned fresh air and introduced into the passenger cabin or the cabin sections of the passenger cabin as processed recirculation air.

## Revendications

1. Système régulateur de climatisation d'un avion de transport de passagers comprenant une cabine de passagers (4), dans lequel système un dispositif de climatisation (5) est relié, côté entrée, à un dispositif régulateur d'air frais (3), qui est lui-même relié à un réseau de distribution d'air haute pression (7), ce dernier délivrant de l'air frais chaud fortement comprimé que le dispositif régulateur d'air frais (3) transfère au dispositif de climatisation (5), dans lequel ce dernier est relié, côté sortie, à un réseau de distribution d'air sous basse pression (8), auquel il délivre de l'air frais détendu et refroidi comme air conditionné, et auquel est relié au moins un dispositif de traitement d'air (6), qui est lui-même relié, côté entrée, à un échappement d'air (9) intégré à la paroi de la cabine de passagers et aspire en outre une partie de l'air vicié de la cabine comme air de recirculation, l'unité de traitement d'air (6) présentant une unité à soufflante (61), qui réalise l'aspiration de l'air de recirculation, dans lequel l'unité de traitement d'air (6) est reliée, côté sortie, à une admission d'air (10) intégrée à la paroi de la cabine de passagers, via laquelle de l'air mélangé est injecté comme air de recirculation traité dans la cabine de passagers (4), dans lequel sont agencées, dans la cabine de passagers (4), une unité (2) de contrôle de la température de la cabine et, à l'intérieur de la jonction alimentée en courant d'air raccordée à l'admission d'air (10), une unité (13) de contrôle de la température de la tuyauterie, avec lesquelles l'unité régulatrice (1) est en communication, l'unité (2) de contrôle de la température de la cabine captant les températures existantes dans la cabine et l'unité (13) de contrôle de la température de la tuyauterie, les températures existantes de l'air mélangé injecté et les acheminant par voie de signaux à l'unité régulatrice (1), dans laquelle le dispositif de traitement d'air (6) est en communication avec l'unité régulatrice (6), le dispositif de traitement d'air (6) transférant la vitesse de rotation concernée de l'unité à soufflante (61) à l'unité régulatrice (1) par voie de signaux, l'unité régulatrice (1) se présentant en l'occurrence sous une forme permettant de déterminer les états effectifs et ceux qui lui sont signalés séparément de la température existante de la cabine de passagers (4) ainsi que de la température effective de l'air mélangé injecté dans la cabine de passagers (4),
**caractérisé en ce que** l'unité régulatrice (1) est en outre en communication avec le dispositif régulateur d'air frais (3), ce dernier signalant à l'unité régulatrice (1) une information d'état sur le flux massique d'air frais qui la traverse, et avec le dispositif de climatisation (5), ce dernier signalant à l'unité régulatrice (1) une information d'état sur la température d'échappement effective de l'air frais conditionné, et avec des conduites de signalisation correspondantes (12) provenant du poste de pilotage et du panneau de cabine, ces conduites de signalisation (12) transférant comme références de valeurs de consigne des données de système prédéterminées de l'avion, qui se rapportent à l'altitude de l'avion de passagers, à la température de la cabine et au nombre de passagers de la cabine de passagers (4) ainsi qu'à d'autres paramètres de système prédéterminés,
et l'unité régulatrice (1) convient en outre à la détermination de l'état effectif et de celui qui lui est séparément signalé du flux massique d'air frais passant à travers le dispositif régulateur d'air frais (3), qui se présente en outre sous une forme permettant la comparaison des états signalés séparément avec les données de système prédéterminées comme références de valeurs de consigne, qui se rapportent à une fraction d'air frais - nécessaire au minimum à l'intérieur de la cabine - de l'air mélangé par passager de l'avion, à des critères correspondants pour une température d'échappement minimale - spécifique à l'installation et fonction du débit d'air frais - de l'air frais conditionné du dispositif de climatisation (5) ainsi qu'à une température de l'air mélangé tirée de l'observation du bilan thermique de la cabine de passagers (4) et, par suite, à une quantité d'air de recirculation nécessaire dans l'air mélangé, qui est atteinte par commande de la vitesse de rotation de l'unité à soufflante (61), qui sont en corrélation avec l'altitude correspondante de l'avion de passagers et la charge de passagers de la cabine (4) de l'avion ainsi qu'avec une température prédéterminée de la cabine, et, par suite, la détermination du flux massique d'air frais - nécessaire au minimum et en dessous duquel on ne peut descendre - du dispositif régulateur d'air frais (3) ainsi que la température d'échappement minimale de l'air frais conditionné du dispositif de climatisation (5) et l'augmentation nécessaire de la vitesse de rotation de l'unité à soufflante (61) pour augmenter la quantité d'air aspirée dans la cabine et accroître l'acheminement d'air mélangé à travers le dispositif de traitement d'air (6) dans la cabine de passagers (4), l'unité régulatrice (1) étant à même de remplacer la quantité différentielle entre le flux massique d'air frais passant à travers le dispositif régulateur d'air frais (3) et celui minimal détecté et/ou de régler l'air mélangé à un niveau de température prédéterminé qui convient ensuite à la conversion du flux massique d'air frais minimal détecté et de la température d'échappement minimale détectée de l'air frais conditionné ainsi que de la température de l'air mélangé en signaux correspondants, qu'elle délivre ensuite au dispositif régulateur d'air frais (3) et au dispositif de climatisation (5), l'unité régulatrice (1) commandant par voie de signaux l'unité à soufflante (61) qui compense ensuite, par augmentation de la vitesse de rotation, la quantité manquante d'air introduite dans la cabine de passagers (4) et/ou la température de l'air mélangé injecté dans la cabine de passagers (4) au niveau de température qui lui est prédéterminé par augmentation du volume d'aspiration d'air de la cabine.

2. Système régulateur de climatisation selon la revendication 1, **caractérisé en ce qu'**un dispositif régulateur d'air frais chaud (16) est raccordé en outre en parallèle au dispositif de climatisation (5) sur base du flux d'air.

3. Système régulateur de climatisation selon la revendication 2, **caractérisé en ce que** le dispositif régulateur d'air frais chaud (16) est constitué au moins d'une unité de soupape régulatrice d'air (161) qui est en communication avec l'unité régulatrice (1), l'unité de soupape (161) acheminant la position effective de la soupape à l'unité régulatrice (1) par voie de signaux.

4. Système régulateur de climatisation selon la revendication 2, **caractérisé en ce que** le dispositif régulateur d'air frais chaud (16) est constitué d'une unité de soupape régulatrice d'air (161) et d'une unité de soupape régulatrice de pression (162), qui sont toutes deux reliées en série sur base du flux d'air, l'unité de soupape régulatrice d'air (161) acheminant la position effective de la soupape à l'unité régulatrice (1) par voie de signaux.

5. Système régulateur de climatisation selon la revendication 1, **caractérisé en ce que** la cabine de passagers (4) est composée de plusieurs sections de cabine (41, 42), qui sont mutuellement cloisonnées, dans lesquelles est aménagée respectivement une unité de contrôle de température (21, 22), qui est en communication avec l'unité régulatrice (1), ces unités détectant séparément la température existante des sections de cabine et l'acheminant à l'unité régulatrice par voie de signaux, et **en ce que** chaque section de cabine (41, 42) présente une admission d'air (101, 102) et un échappement d'air (91, 92), qui sont reliés sur base du flux d'air et séparément à une unité de traitement d'air (66, 67), qui sont raccordés au réseau de distribution d'air basse pression (8) sur base du flux d'air, étant affectée à chaque liaison sur base du flux d'air proche de l'admission d'air concernée (101, 102) respectivement une unité (131, 132) de contrôle de température de la tuyauterie, qui sont en communication avec l'unité régulatrice (1), ces unités détectant séparément la température existante de l'air de recirculation injecté et l'acheminant à l'unité régulatrice (1) par voie de signaux, et **en ce que** les unités à soufflante (611, 612) intégrées aux unités de traitement d'air (66, 67) sont en communication avec l'unité régulatrice (1), ces unités acheminant séparément leur vitesse de rotation concernée à l'unité régulatrice (1) par voie de signaux et celle-ci les commandant séparément par voie de signaux.

6. Système régulateur de climatisation selon les revendications 2 à 4 et 5, **caractérisé en ce qu'**à la branche de conduite concernée sur base du flux d'air, via laquelle l'air frais conditionné atteint l'entrée de l'unité de traitement d'air (66, 67) qui lui est affectée, est reliée côté sortie, respectivement, une unité de soupape régulatrice d'air (1611, 1612), lesquelles unités sont en communication avec l'unité régulatrice (1), les unités de soupape (1611, 1612) acheminant à l'unité régulatrice (1) par voie de signaux la position effective de la soupape, dont les branches de conduite affectées côté entrée débouchent dans une interface sur base du flux d'air, qui est raccordée à la branche de conduite qui est agencée en amont du dispositif de climatisation (5), en raccordant entre l'interface et cette branche de conduite l'unité de soupape régulatrice de pression (162), qui s'ajuste sur les conditions de pression du réseau de distribution basse pression (8).

7. Système régulateur de climatisation selon la revendication 1, **caractérisé en ce que** l'unité (2) de contrôle de la température et l'unité (13) de contrôle de la température de la tuyauterie sont constituées au moins d'un capteur, qui détecte des températures et les convertit en signaux, l'unité (13) de contrôle de température de la tuyauterie étant installée près de l'admission d'air (10).

8. Procédé de climatisation d'une cabine de passagers d'avion, dans lequel la climatisation d'un espace de passagers est influencée par une distribution prédéfinie du flux massique d'air, les étapes suivantes étant prémémorisées pour l'aération régulée de la cabine de passagers (4) de la façon suivante : l'air frais chaud fortement comprimé délivré par un réseau de distribution d'air haute pression (7) est acheminé sur base du flux d'air à un dispositif régulateur d'air frais (3), passe à travers le dispositif régulateur d'air frais (3) de façon contrôlée et est acheminé sur base du flux d'air à un dispositif de climatisation (5), y est détendu et refroidi, puis délivré à un dispositif de distribution d'air basse pression (8) comme air conditionné, qui est ensuite acheminé sur base du flux d'air à un dispositif de traitement d'air (6), dans lequel il est mélangé à une partie de l'air de cabine vicié, qui est aspiré de la cabine de passagers (4) au moyen d'une unité à soufflante (61) intégrée au dispositif de traitement d'air (6) comme air de recirculation, et, ensuite, l'air mélangé obtenu dans le dispositif de traitement d'air (6) est introduit comme air de recirculation traité dans la cabine de passagers (4), les températures de la cabine de passagers (4) existant spatialement étant détectées par une unité (2) de contrôle de la température de la cabine et la température de l'air mélangé, qui est acheminé à la cabine de passagers, étant détectée par une unité (13) de contrôle de la température de la tuyauterie, tandis que l'on détecte également la vitesse de rotation concernée de l'unité à soufflante (61), avec laquelle l'aspiration de la partie de l'air vicié de la cabine est entraînée, dans lequel une unité régulatrice (1), à laquelle sont acheminées par voie de signaux les variations d'état détectées par les dispositifs et les unités et auquel sont délivrées en outre des données de système de l'avion prédéfinies par le poste de pilotage et/ou un panneau de cabine, commande et règle par voie électronique les dispositifs sur la base du résultat des informations comparées,
**caractérisé en ce que** :
- la température d'échappement effective de l'air frais conditionné, que fournit la température du flux d'air frais côté sortie du dispositif de climatisation, est détectée,
- le flux massique d'air frais, qui passe à travers le dispositif régulateur d'air frais (3), est détecté en quantité,
- l'unité régulatrice (1), qui compare par voie de signaux les grandeurs d'état qui lui sont acheminées à des critères correspondants des données de système prédéfinies de l'avion, qui se rapportent à une fraction d'air frais - nécessaire au minimum à l'intérieur de la cabine - de l'air mélangé par passager de l'avion, à une température d'échappement minimale - spécifique à l'installation et fonction du débit d'air frais - de l'air frais conditionné du dispositif de climatisation (5) et, par suite, à une quantité d'air de recirculation nécessaire dans l'air mélangé, qui est atteinte par commande de la vitesse de rotation de l'unité à soufflante (61), qui sont en corrélation en particulier avec l'altitude correspondante de l'avion de passagers et la charge en passagers de la cabine de l'avion ainsi qu'avec la température prédéfinie de la cabine, et on détermine de la sorte les grandeurs d'état nécessaires au minimum qui permettent d'obtenir des variations de l'acheminement en quantité de l'air frais chaud fortement comprimé au dispositif de climatisation (5) et la température d'échappement de l'air frais conditionné à la sortie du dispositif de climatisation (5), qui sont ensuite acheminées par voie de signaux aux dispositifs concernés qui règlent ensuite sur base du flux d'air les grandeurs d'état nécessaires au minimum,
- simultanément, la quantité différentielle de l'acheminement d'air frais, qui est tirée de la grandeur d'état détectée et de celle nécessaire au minimum, est détectée par l'unité régulatrice (1) et, ensuite, est acheminée par voie de signaux à l'unité à soufflante (61), dont la vitesse de rotation est alors augmentée, si bien que la quantité manquante d'air introduite en matière de flux d'air dans la cabine de passagers (4) et/ou la température de l'air mélangé injecté est ou sont compensées, à un niveau de température qui lui est prédéterminé, par augmentation du volume d'air de cabine aspiré qui s'ajoute à l'air frais conditionné.

9. Procédé selon la revendication 8, **caractérisé en ce que** les températures de la cabine, la température de l'air mélangé et la température d'échappement de l'air frais conditionné sont captées par des capteurs et converties ensuite en signaux électroniques ou en signaux lumineux.

10. Procédé selon la revendication 8, **caractérisé en ce que** la vitesse de rotation de l'unité à soufflante (61) et la position de la soupape du dispositif régulateur d'air frais (3) sont captées par voie électronique et sont ensuite converties en signaux électroniques ou en signaux lumineux.

11. Procédé selon la revendication 8, **caractérisé en ce que** les données prédéfinies de l'avion sont délivrées par voie électronique ou optique.

12. Procédé selon la revendication 8, **caractérisé en ce que** le traitement des signaux détectés par l'unité régulatrice (1) est effectué par voie électronique ou par voie électronique après conversion optoélectronique prémémorisée et les signaux délivrés en fonction des résultats sont convertis en signaux électroniques ou en signaux lumineux et sont acheminés aux dispositifs ou aux unités.

13. Procédé selon la revendication 8, **caractérisé en ce que** l'air frais chaud fortement comprimé contrôlé est en outre dérivé en partie, puis est réglé à basse pression à laquelle correspond l'air frais conditionné, et, ensuite, en en réglant la quantité, est acheminé aux sections individuelles d'une cabine de passagers (4) via des dispositifs de traitement d'air affectés à ces sections sur base du flux d'air, et **en ce qu'**une quantité d'air, qui est obtenue à la suite des données de système prédéfinies de l'avion après comparaison électronique prémémorisée avec les signaux détectés par l'unité régulatrice (1), est compensée par l'augmentation du volume d'air aspiré de la cabine et est mélangée à l'air frais conditionné comme air de recirculation traité de la cabine de passagers ou est introduite dans les sections de la cabine de passagers.
